# EUROPÄISCHE PATENTSCHRIFT

(11) **EP 0 491 744 B1**
(45) Veröffentlichungstag und Bekanntmachung des Hinweises auf die Patenterteilung: **14.04.1993**
(21) Anmeldenummer: 90913064.3
(22) Anmeldetag: 13.09.1990
(51) Int. Cl.: B60R 22/46

(54) **AUSLÖSEVORRICHTUNG FÜR EINEN MECHANISCHEN ENERGIESPEICHER**
RELEASE MECHANISM FOR A MECHANICAL-ENERGY STORAGE DEVICE
DISPOSITIF DE DECLENCHEMENT POUR UN ACCUMULATEUR D'ENERGIE MECANIQUE

(30) Priorität: 16.09.1989 DE 3930980
(43) Veröffentlichungstag der Anmeldung: 01.07.1992
(73) Patentinhaber: AUTOFLUG GMBH & CO FAHRZEUGTECHNIK, D-25462 Rellingen (DE)
(72) Erfinder: REULEIN, Hermann, D-2080 Pinneberg-Thesdorf (DE); LIENSDORF, Alfred, D-2000 Norderstedt (DE); LACHER, Bernd, D-2216 Agathorst (DE); ECKMANN, Peter, D-2000 Hamburg (DE); KOCK, Hans-Otto, D-2358 Kaltenkirch (DE)
(74) Vertreter: Müller, Karl-Ernst, Dr., Dipl.-Ing.
(86) Internationale Anmeldenummer: DE9000708
(87) Internationale Veröffentlichungsnummer: WO9104175

(56) Entgegenhaltungen:
- EP-A- 300 469
- EP-A- 305 765
- GB-A- 2 157 152

## Beschreibung

Die Erfindung betrifft eine Vorrichtung zur Freigabe eines mechanischen Energiespeichers, insbesondere einer vorgespannten Feder, in einem Auslösefall, wobei zur Sicherung des Energiespeichers in dessen Ruhelage ein Sperrhebel angeordnet ist, der in seiner den Energiespeicher festlegenden Sperrlage unter Vorspannung auf einer im Auslösefall unter der Wirkung eines beschleunigungsempfindlichen Auslöseorgans auslenkbaren Stütze auflagert.

Eine gattungsgemäße Vorrichtung, welche bei einem Gurtstrammer für Sicherheitsgurte in Kraftfahrzeugen Verwendung findet, ist in der EP-A-0 305 765 beschrieben. Bei der bekannten Vorrichtung ist die auslenkbare Stütze zur Halterung des den Energiespeichers in der Sperrlage haltenden Sperrhebels durch einen vertikal angeordneten Sensorhebel gebildet, der an seinem freien nach oben ragenden Ende eine Trägheitsmasse trägt und durch Federmittel in seiner vertikalen Bereitschaftsstellung gehalten ist; der vertikal stehende Sensorhebel ist über ein zusätzliches Gestänge mit dem Sperrhebel zu dessen Verschwenkung gekoppelt.

Mit der bekannten Vorrichtung ist der Nachteil verbunden, daß die Anordnung des Sensorhebels mit Trägheitsmasse als beschleunigungsempfindliches Auslöseorgan für den Sperrhebel und dessen erforderliche mechanische Kopplung mit dem Sperrhebel in ihrer konstruktiven Ausbildung kompliziert ist und des Zusammenwirkens mehrerer Einzelteile bedarf; daher ist es auch schwierig, die Ansprechschwelle für die Bewegung des Sperrhebels in dessen Freigabestellung für den Energiespeicher einzustellen und bei dem Funktionsablauf mit der erforderlichen Genauigkeit einzuhalten.

Der Erfindung liegt die Aufgabe zugrunde, bei einer gattungsgemäßen,Vorrichtung das beschleunigungsempfindliche Auslöseorgan für den Sperrhebel in seiner Ausbildung zu vereinfachen und die Funktionssicherheit der Vorrichtung zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

In einer ersten Ausführungsform sieht die Erfindung vor, daß die Stütze als eine zwischen einem gehäusefesten Federlager und dem Sperrhebel angeordnete und im Auslösefall unter der Wirkung ihrer Massenkräfte einknickende Druckfeder ausgebildet ist, woraus sich der Vorteil ergibt, daß die Stütze selbst als beschleunigungsabhängiges Auslöseorgan arbeitet und es somit der Ausbildung gesonderter Verbindungsmittel zum Sperrhebel nicht bedarf. Weiterhin ist die erforderliche Zeit zwischen dem Ansprechen des Trägheitsorgans und der Verschwenkung des Sperrhebels verringert, weil schon die Auslenkung der Druckfeder unmittelbar zu einer Verschwenkung des Sperrhebels und damit zur Freigabe des Energiespeichers führt.

Nach einem Ausführungsbeispiel der Erfindung kann dabei die Stütze auch aus zwei einzelnen Federn mit einer zwischen diesen angeordneten Trägheitsmasse ausgebildet sein.

In einer zweiten Ausführungsform sieht die Erfindung vor, daß die Stütze aus zwei zwischen einem Auflager und dem Sperrhebel eingespannten, aufeinanderstehend angeordneten und im Auslösefall unter der Wirkung ihrer Massenkräfte einknickenden Körper gebildet ist; hierbei können die die Stütze bildenden Körper eine zylindrische oder auch rechteckige Form aufweisen. Zusätzlich kann vorgesehen sein, daß die Körper durch eine an ihnen angreifende Zugfeder in ihrer Ausgangslage gehalten sind.

In einer dritten Ausführungsform sieht die Erfindung vor, daß die Stütze aus einer in einer gehäusefesten Kugelpfanne angeordneten, frei rollbaren Kugel besteht Auch bei dieser Ausführungsform ist die unmittelbare Auflagerung des Sperrhebels auf der frei rollbaren Kugel von Vorteil.

In einer weiteren Ausführungsform sieht die Erfindung vor, daß die Stütze aus zwei über ein Gelenk miteinander verbundenen Hebeln in Strecklage besteht, welche mittels einer sich jeweils an den Hebeln abstützenden Feder in der gestreckten Lage gehalten sind, wobei die beiden Auflagerungen für die Hebel eine Auslenkung der Hebel erleichternde Wälzflächen aufweisen dergestalt, daß die vom Hebel auf die Stütze ausgeübte Einspannkraft bei Auslenkung der Stütze konstant bleibt.

Soweit zu den Ausführungsformen der Erfindung nach einem Ausführungsbeispiel vorgesehen ist, daß der Sperrhebel gegen einen an seinem anderen Ende fest gelagerten Kniehebel abgestützt ist, wobei die Stütze dem Kniehebelgelenk zugeordnet ist und in der nicht ausgelenkten Stellung den Kniehebel in dessen Ausgangslage hält, ist aus der EP-A-0 300 469 bereits die Einschaltung eines Kniehebels als Verbindung zwischen einem im übrigen aber aufwendig ausgebildeten Trägheitssensor und dem Sperrhebel bekannt. Bei den der Kniehebelausbildung zugeordneten Ausführungsbeispielen der Erfindung kann vorgesehen sein, daß der Kniehebel zwischen dem Sperrhebel und seinem Festlager gegen die Stütze leicht ausgeknickt ist, wobei nach einem Ausführungsbeispiel der Erfindung die Vorknickung des Kniehebels unter fünf Grad liegt. Zweckmäßig kann der Kniehebel in gestreckter Lage angeordnet sein, wobei eine auf das Kniehebelgelenk in Richtung der Stütze wirkende, sich am Gehäuse abstützende Druckfeder vorgesehen ist.

In einer weiteren Ausführungsform sieht die Erfindung vor, daß die Stütze aus zwei zwischen einem Auflager und dem Sperrhebel eingespannten, übereinander angeordneten Rollenkörpern gebildet ist, zwischen denen ein bewegliches und von einer Sensormasse beaufschlagtes Rollenlager angeordnet ist. Hierbei kann vorgesehen sein, daß das plattenförmige Rollenlager mit einer zylindrisch ausgebildeten in einer Bohrung eines Gehäuses gegen Federwirkung axial beweglichen Sensormasse verbunden ist.

Nach einem ersten Ausführungsbeispiel ist zwischen Rollenlager und Sperrhebel eine Rolle angeordnet, wobei das Rollenlager auf dem Gehäuse beweglich ist. Alternativ ist zwischen dem Sperrhebel und dem Gehäuse eine in einem Rollenkäfig gehaltene Rolle angeordnet, wobei ein mit der Sensormasse verbundener Stößel an dem Rollenkäfig angreift. Schließlich kann eine einzige Rolle zwischen dem Sperrhebel und einem Absatz der beweglichen Sensormasse angeordnet sein.

In der Zeichnung sind Ausführungsbeispiele der Erfindung wiedergegeben, welche nachstehend beschrieben sind. Im einzelnen zeigen:
- Fig. 1: eine Freigabevorrichtung mit Knickfeder,
- Fig. 2: eine Freigabevorrichtung mit Knickfeder und Trägheitsmasse,
- Fig. 3: die Freigabevorrichtung gamäß Figur 2 nach Auslösung,
- Fig. 4: eine Freigabevorrichtung mit Knickstütze,
- Fig. 5: die Freigabevorrichtung gemäß Figur 4 nach Aulösung,
- Fig. 6: eine Freigabevorrichtung mit Kugelabstützung,
- Fig. 7a: eine Freigabevorrichtung mit Rollenabstützung,
- Fig. 7b - d: weitere Ausführungsbeispiele der Vorrichtung gemäß Figur 7a,
- Fig. 8: eine Freigabevorrichtung mir einer anderen Ausführungsform einer Knickstütze,
- Fig. 9: den Gegenstand der Figur 8 in Auslösestellung,
- Fig. 10: eine Freigabevorrichtung mit massebehaftetem Sensorhebel,
- Fig. 11: die Freigabevorrichtung gemäß Figur 10 nach Auslösung.

In den Figuren ist jeweils eine Feder 10 in einem Gehäuse 11 angeordnet, welche in ihrem vorgespannten Zustand auf einen Kolben 12 mit einem Zugseil 48 wirkt, wobei die Bewegungen des Seiles 48 in Vielfältiger Weise für beispielsweise Strammbewegungen in Sicherheitsgurteinrichtungen ausnutzbar ist.

Eine Kolbenstange 13 dient zum Spannen der Feder 10 und zur Führung 12. Durch einem an dem Kolben 12 angreifenden Sperrhebel 14 ist die Feder 10 in ihrer vorgespannten Lage gehalten und gesichert, so daß eine Freigabe der Feder 10 durch Herausschwenken des Sperrhebels 14 aus der Bewegungsbahn des Kolbens 12 erfolgt. Gleichzeitig wirkt die Kraft der vorgespannten Feder 10 über den Kolben 12 als Abstützungskraft auf den Sperrhebel 14.

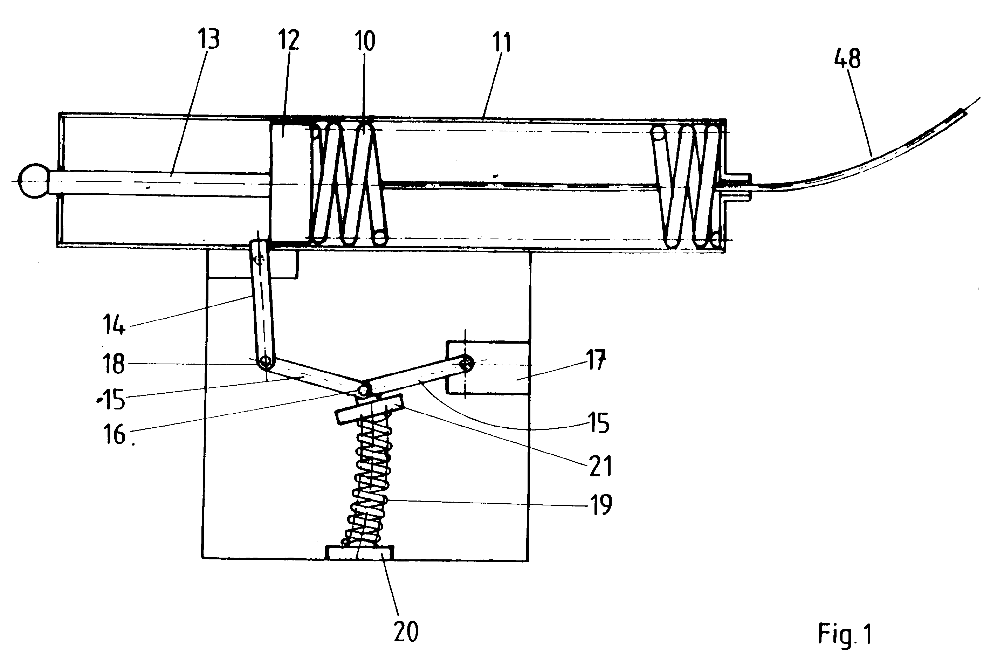

Bei dem in Figur 1 gezeigten Ausführungbeispiel ist der Sperrhebel 14 an seinem freien Ende mit einem Gelenk 18 gegen einen Kniehebel 15 abgestützt, wobei der Kniehebel 15 an seinem freien Ende in einem Festlager 17 gehalten ist. Zwischen dem Kniehebelgelenk 16 und einem gehäusefesten Federlager 20 ist eine Druckfeder 19 angeordnet, die mittels einer Federplatte 21 verspannt ist. Das Kniehebelgelenk 16 ist dabei in Richtung der als Stütze wirkenden Druckfeder 19 leicht vorgeknickt, so daß sich eine entsprechend schnelle Knickbewegung nach Auslenkung der Feder 19 ergibt.

Bei dem Ausführungsbeispiel ist die Feder 10 durch den Sperrhebel 14 in der vorgespannten Stellung gehalten. Der Sperrhebel stützt sich auf dem Kniehebel 15 ab, der seinerseits sich mit seinem Gelenk 16 auf der Druckfeder 19 abstützt; die Druckfeder ist so ausgelegt, daß sie unterhalb der festgelegten Ansprechgrenze knickstabil ist. Bei einer einwirkenden Beschleunigung oberhalb der Ansprechgrenze erfährt die Feder 19 durch ihre Massenkräfte eine Querkraft, welche das Einknicken der Feder 19 bewirkt und somit den Kniehebel 15 mit Sperrhebel 14 freigibt.

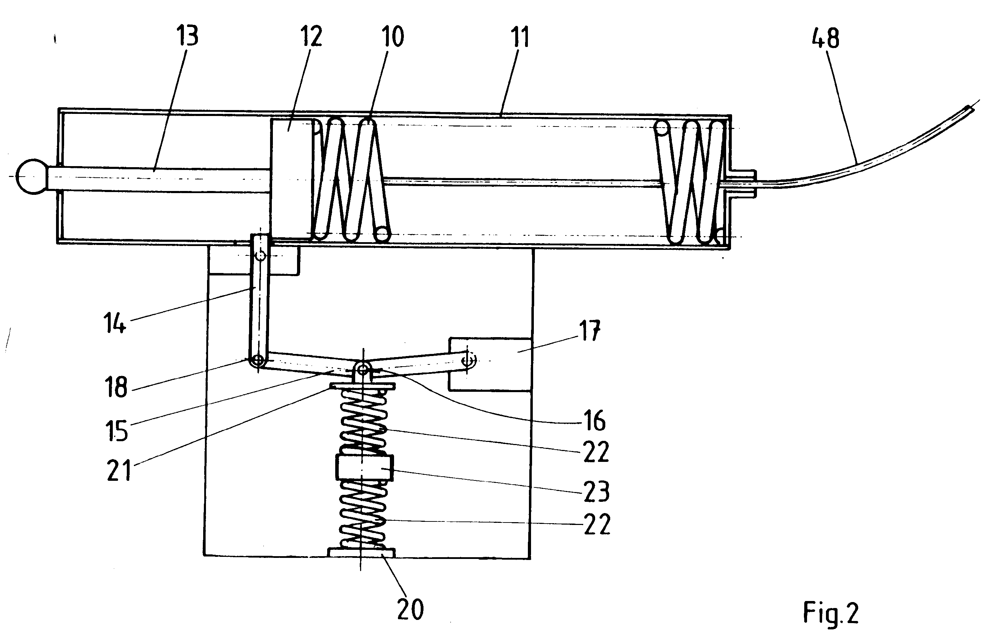

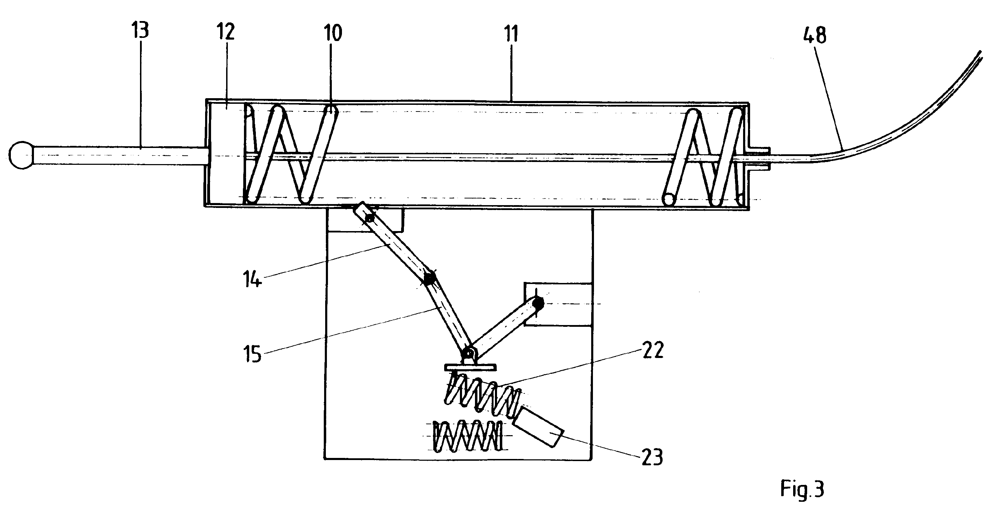

Wie aus Figur 2 ersichtlich, kann in Abwandlung zu dem beschriebenen Ausführungsbeispiel die Druckfeder auch aus zwei getrennten Federn 22 gebildet sein, zwischen denen eine Trägheitsmasse 23 angeordnet ist; wie die Figur 3 erkennen läßt, führt eine als Querkraft auftretende Beschleunigungskraft zum Auslenken der Trägheitsmasse 23 und zum Knicken der Federn 22, wodurch die Abstützung des Kniehebels 15 ebenfalls aufgehoben ist.

Bei den beiden vorstehend beschriebenen Ausführungsformen kann zusätzlich am Federlager 20 eine Einstellmöglichkeit vorgesehen sein, um Fertigungstoleranzen ausgleichen oder auch die Ansprechschwelle genauer einstellen zu können.

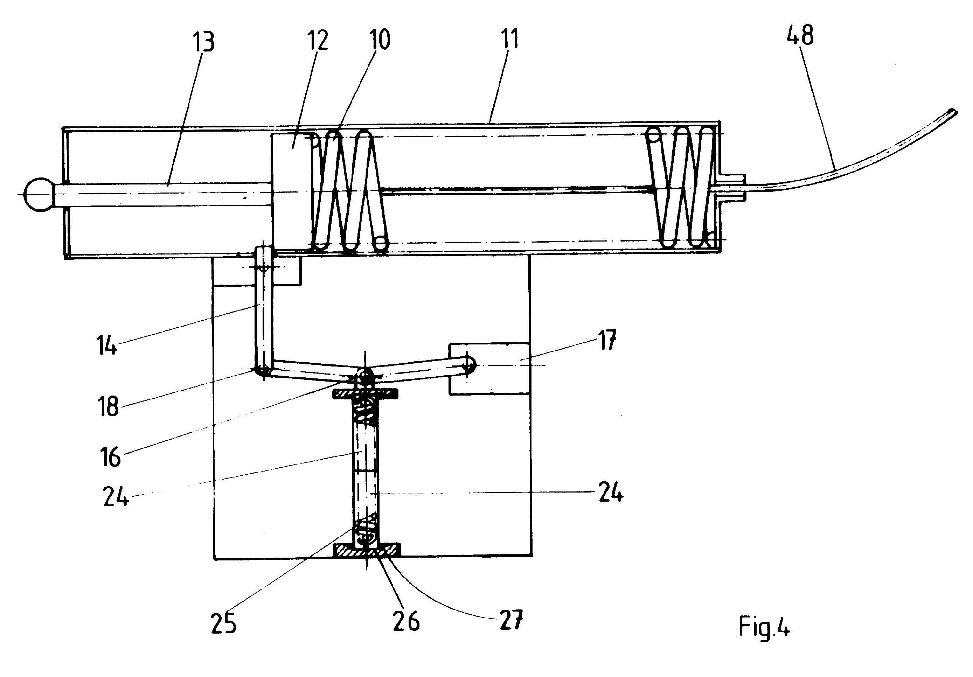

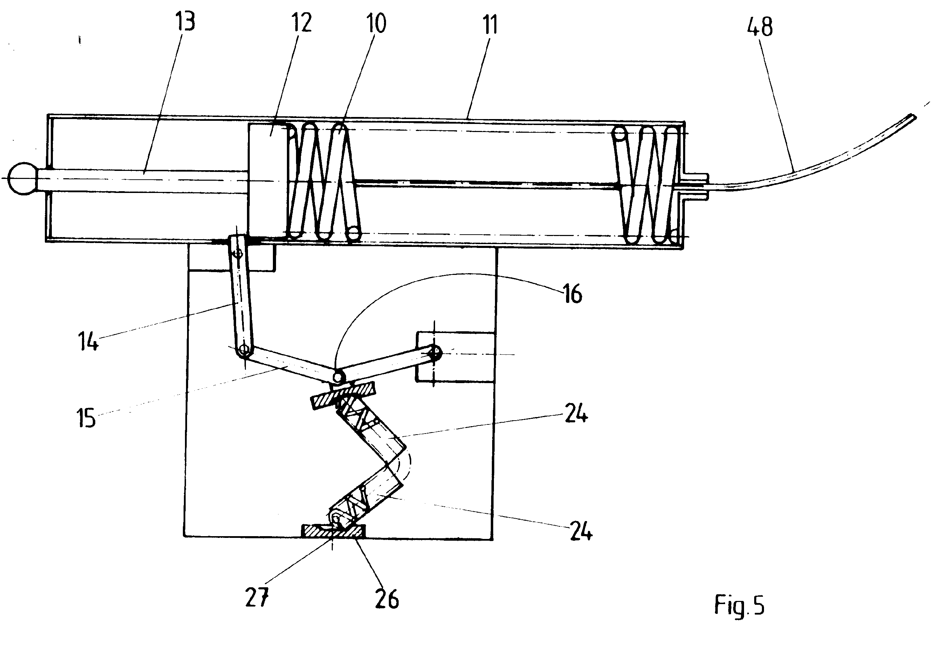

Aus den Figuren 4 und 5 ergibt sich ein Ausführungsbeispiel der Erfindung, bei welchem die das Kniehebelgelenk 16 haltende Stütze aus zwei aufeinanderstehenden zylindrischen oder rechteckigen Körpern gebildet ist, die bei dem hier dargestellten Ausführungsbeispiel zusätzlich durch eine Zugfeder gegeneinander verspannt sind. Die Stütze 24 ruht dabei in einem gehäusefesten Auflager 26 mit einer entsprechend ausgebildeten Muldung, durch welches eine Kippkante 27 festgelegt wird.

Sofern eine Beschleunigungskraft quer zur Achse der Zylinder 24 wirkt, kommt es zu einer Auslenkung der Zylinder 24 gegeneinander und zum Einknicken der Stütze, sobald der sich einstellende Knickpunkt über der Kippkante 27 des Auflagers 26 zu liegen kommt. Unterhalb der Ansprechschwelle sorgt die Feder 25 für ein Wiederaufrichten der Knickstütze, und ferner kann mittels der vorgesehenen Feder 25 die Ansprechempfindlichkeit dieser Sensorausbildung eingestellt werden.

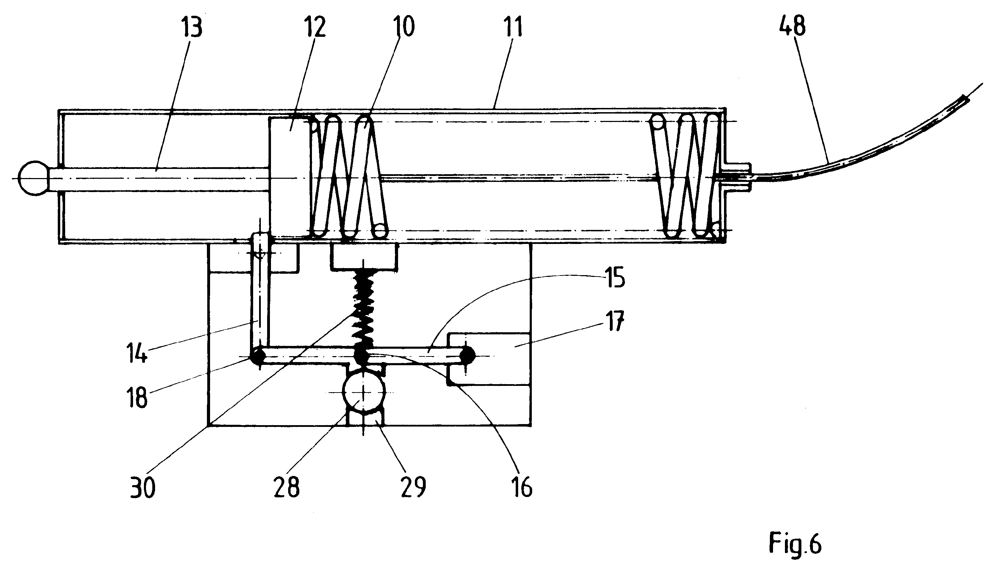

Bei dem in Figur 6 dargestellten Ausführungsbeispiel ist das Kniehebelgelenk 16 gegen eine in einer gehäusefesten Kugelpfanne 29 frei rollbar vorgesehenen Kugel 28 abgestützt, wozu die Kniehebel 15 eine entsprechend abgerundete Aufstandsfläche aufweisen. Bei diesem Ausführungsbeispiel ist der Kniehebel 15 in gestreckter Lage zwischen der Abstützung 18 am Sperrhebel 14 und dem Festlager 17 angeordnet und im Bereich seines Kniehebelgelenks von einer sich gegen das Gehäuse 10 abstützenden Druckfeder 30 in die Anlage an der Kugel 28 belastet.

Kommt es dabei zu auf die Kugel 28 wirkenden Beschleunigungskräften, so wird die Kugel 28 in der Kugelpfanne 28 ausgelenkt und drückt dabei das Kniehebelgelenk 16 gegen die Druckfeder 30; bleiden die wirkenden Beschleunigungskräfte unterhalb der eingestellten Ansprechschwelle, so hält die Feder 30 den Kniehebel 15 in seiner Sicherungslage und drückt damit auch die Kugel 28 wieder in ihre Ruhelage zurück. Wird die Ansprechschwelle überschritten, so wird durch die Bewegung der Kugel 28 in der Kugelpfanne 29 das Kniehebelgelenk 16 nach oben gedrückt, so daß eine Freigabe des Sperrhebels 14 erfolgt. Auch bei diesem Ausführungsbeispiel kann vorgesehen sein, den Kniehebel in einer zwischen ein und fünf Grad vorgeknickten Lage in Richtung der Kugel 28 anzuordnen.

Eine Einstellmöglichkeit bei dieser Ausführungsform ist durch die Feder 30 gegeben; alternativ kann statt der Kugel 28 auch ein stehendes Pendel als Stütze eingesetzt werden.

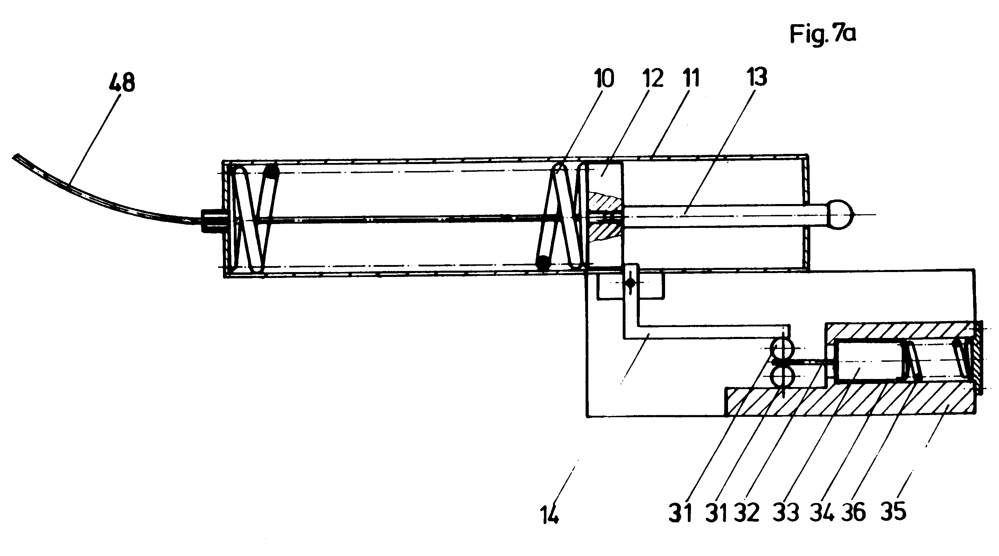

In Figur 7a ist eine Ausführungsform der Erfindung dargestellt, bei welcher der Sperrhebel 14 als Winkelhebel ausgebildet ist, welcher sich mit seinem freien Ende auf einer durch zwei übereinander angeordnete Rollenkörper 31 gebildeten Stütze abstützt; die Rollenkörper 31 sind zwischen einem Gehäuse 35 und dem Hebel 14 eingespannt, und zwischen den Rollenkörpern 31 ist ein Rollenlager 32 angeordnet, welches die Rollenkörper 31 in der zugeordneten Ausgangslage hält. Das Rollenlager 32 ist mit einer in einer Bohrung 34 des Gehäuses 35 axial geführten zylindrischen Sensormasse 33 verbunden, die gegen die Wirkung einer Sensorfeder 36 beweglich ist.

Bei Bewegungen der Sensormasse 33 unterhalb der Ansprechschwelle drückt die Sensorfeder 36 die Sensormasse 33 in ihre Ausgangslage zurück, so daß das System stabil bleibt; liegt die auf die Sensormasse 33 einwirkende Beschleunigungskraft oberhalb der eingestellten Ansprechschwelle, so wird das Rollenlager 32 zwischen den Rollen 31 weggezogen, so daß die so gebildete Stütze zusammenbricht und den Sperrhebel 14 freigibt.

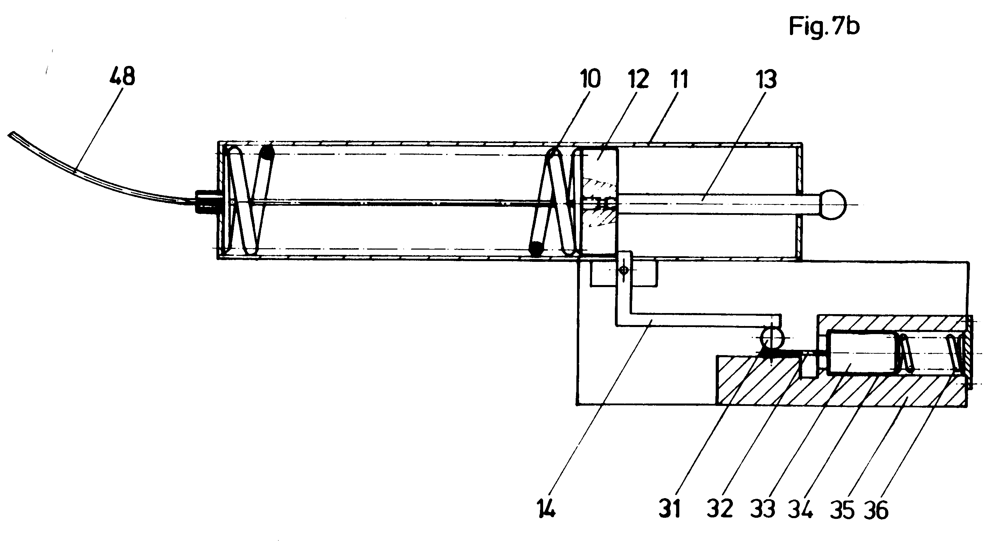

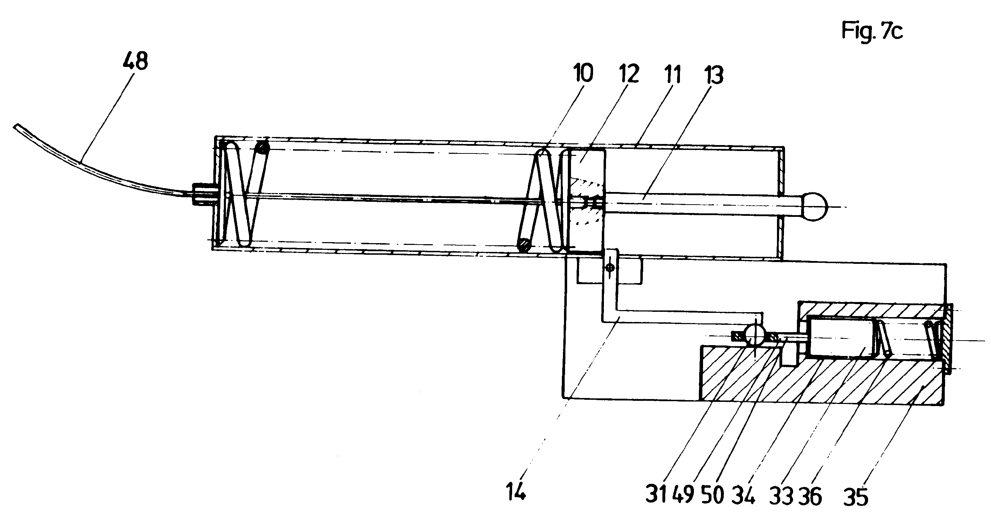

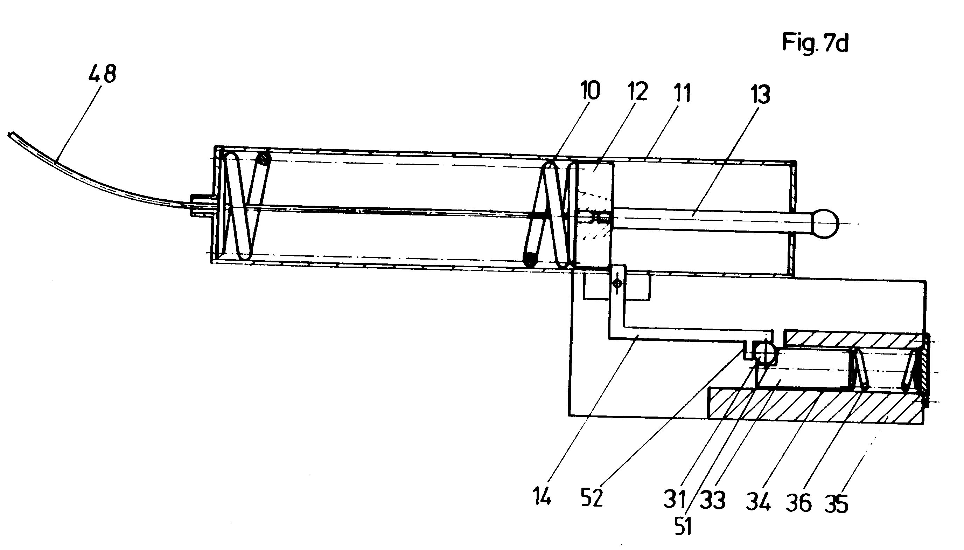

In den Figuren 7b bis d sind weitere Ausführungsformen der grundsätzlich sich aus Figur 7a ergebenden Anordnung wiedergegeben. Bei dem in Figur 7b gezeigten Ausführungsbeispiel ist nur ein Rollenkörper 31 vorgesehen, der zwischen dem Sperrhebel 14 und dem Rollenlager 32 angeordnet ist, wobei das Rollenlager nun unmittelbar auf dem Gehäuse 35 gleitet. Aus Figur 7c ergibt sich eine Anordnung, bei welcher einzige Rolle 31 in einem Rollenkäfig 49 zwischen dem Sperrhebel 14 und dem Gehäuse 35 angeordnet ist, wobei die Sensormasse 33 über einen Stößel 50 mit dem Rollenkäfig 49 verbunden ist. Aus Figur 7d ergibt sich, daß der Rollenkörper 31 unmittelbar zwischen dem Sperrhebel 14 und der Sensormasse 33 angeordnet ist, wozu die Sensormasse 33 einen Absatz 51 aufweist, gegen welchen der Rollenkörper 31 durch den Sperrhebel 14 mittels einer Winkelkralle 52 festgelegt ist.

Bei allen Ausführungsbeispielen gemäß den Figuren 7b bis 7d erfolgt die Freigabe des Sperrhebels 14, wenn der jeweilige Rollenkörper 31 durch den Einfluß der Sensormasse 33 soweit in die Bewegungsrichtung der Sensormasse 33 bewegt wird, daß der Mittelpunkt des Rollenkörpers 31 unter dem Ende des Sperrhebels 14 steht.

Bei dem in dem Figuren 7a bis 7d gezeigten Ausführungsbeispielen kann der jeweilige Rollenkörper 31 auch durch eine Kugel ersetzt sein.

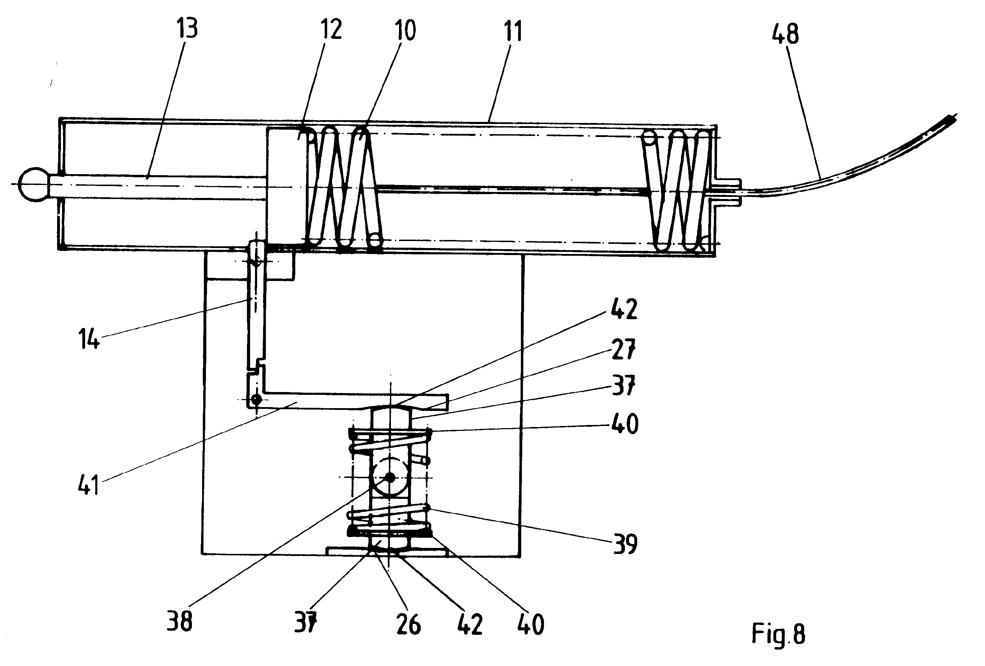

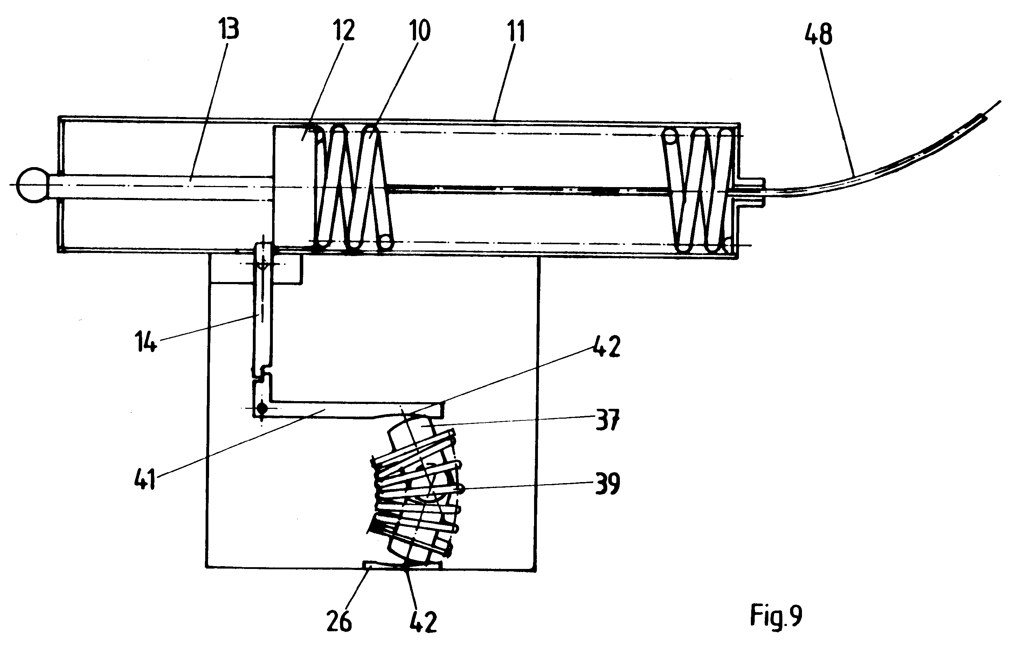

Aus den Figuren 8 und 9 ist ein Ausführungsbeispiel der Erfindung ersichtlich, bei welchem die Stütze zur Abstützung des Sperrhebels aus zwei Hebeln 37 gebildet ist, die in einem Gelenk 38 miteinander verbunden sind. Bei diesem Ausführungsbeispiel greift die Stütze 37 nicht unmittelbar an dem Sperrhebel 14, sondern an einem Übertragungshebel 41 an, der seinerseits mit dem Sperrhebel 14 zusammenwirkt; allerdings ist eine direkte Einwirkung der Stütze 37 auf den Sperrhebel 14 nach Art des aus Figur 7 ersichtlichen Ausführungsbeispiels möglich.

Die aus den Hebeln 37 gebildete Stütze wird durch eine Feder 39 in der gestreckten Lage zwischen dem Auflager 26 und dem Übertragungshebel 41 gehalten, wobei sich die Zugfeder 39 an entsprechenden Federlagern 40 der beiden Hebel 37 abstützt. Sowohl an dem Auflager 26 wie auch am Übertragungshebel 41 sind Wälzflächen 42 derart ausgebildet, daß sich beim Einknicken der Hebel 37 deren Gesamtlänge nicht ändert, so daß in vorteilhafter Weise der Hebel 41 vor dem Ausknicken der Stütze 37 nicht erst gegen die Kraft der Feder 10 angehoben werden muß.

Kommt es bei diesem Ausführungsbeispiel zu einer auf die Hebel 37 wirkenden Beschleunigung, so beginnen die Hebel 37 einzuknicken, wobei sich die Hebel 37 am Übertragungshebel 41 beziehungsweise dem Auflager 26 abwälzen, bis sich das Gelenk 38 über die durch den äußeren Rand der Hebel 37 am Übertragungshebel 41 beziehungsweise Auflager 26 gebildete Kippkante 27 bewegt hat; danach knickt die aus den Hebeln 37 gebildete Stütze völlig ein und gibt den Übertragungshebel 41 und damit auch den Sperrhebel 14 frei.

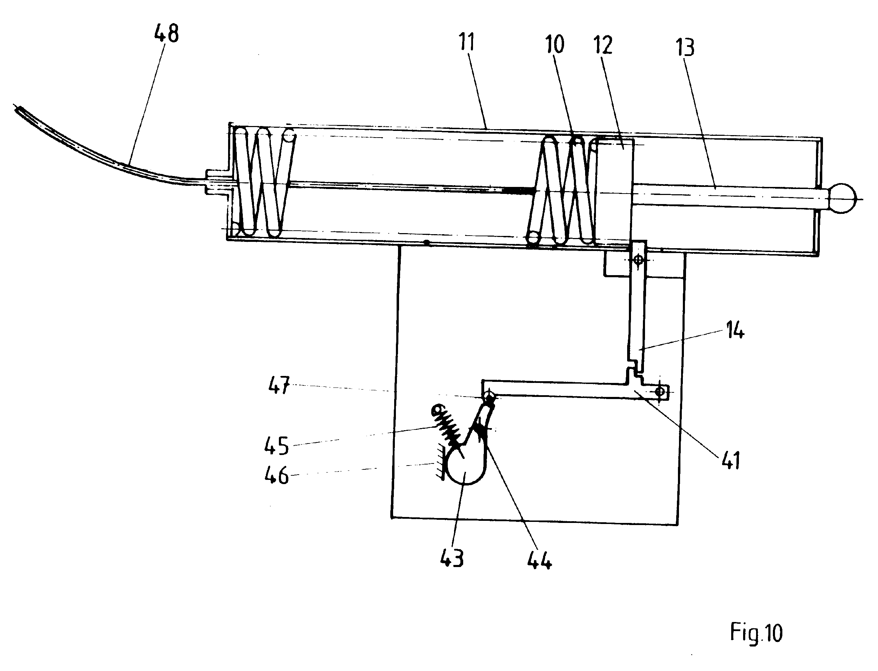

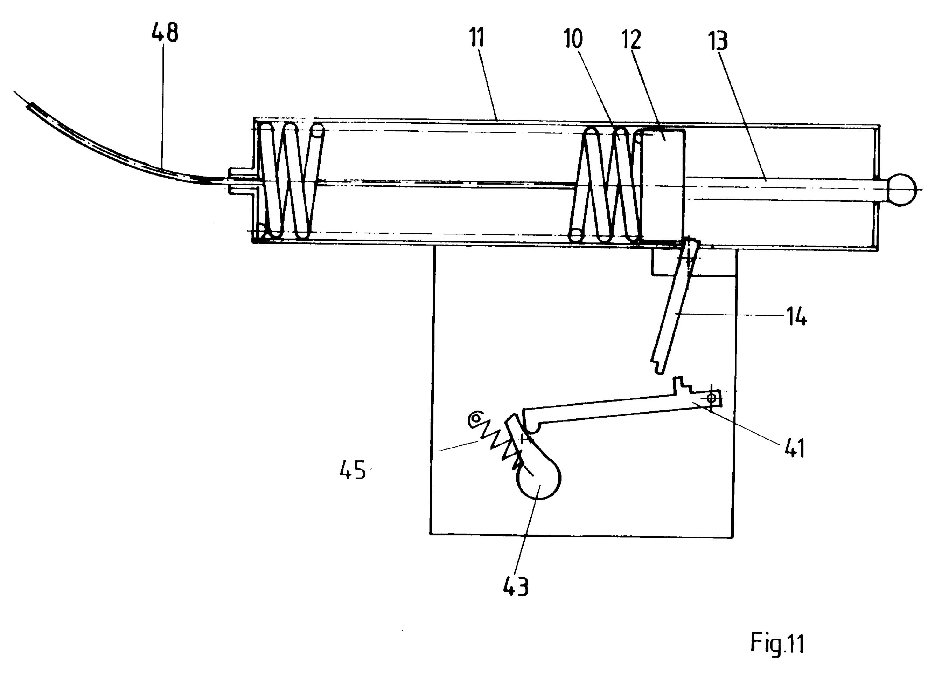

Bei dem in den Figuren 10 und 11 dargestellten Ausführungsbeispiel lagert der Übertragungshebel 41 auf einem massebehafteten und um eine Drehachse 44 gelagerten Sensorhebel 43 auf, wobei die Auflagerung durch eine Rolle 47 gebildet ist. Der Sensorhebel 43 stützt sich in seiner Ruhelage gegen eine Gehäuseabstützung 46 ab und wird hier durch eine Sensorfeder 45 in der Anlage gehalten.

Bei einem Beschleunigungsimpuls unterhalb der Auslöseschwelle kann der Sensorhebel sich bewegen, wird jedoch von der Sensorfeder wieder in die Ruhelage zurückgezogen, so daß die Verspannung mit dem Übertragungshebel 41 aufrechterhalten bleibt; fällt der Beschleunigungsimpuls größer als die festgelegte Ansprechschwelle aus, so schwenkt der Hebel 43 so weit aus, daß das Rollenauflager 47 von dem Heble 43 freikommt, so daß der Übertragungshebel 41 mit dem Sperrhebel 14 freigegeben ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Vorrichtung zur Freigabe eines mechanischen Energiespeichers, insbesondere einer vorgespannten Feder, in einem Auslösefall, wobei zur Sicherung des Energiespeichers (10) in dessen Ruhelage ein Sperrhebel (14) angeordnet ist, der in seiner den Energiespeicher (10) festlegenden Sperrlage unter Vorspannung auf einer im Auslösefall unter der Wirkung eines beschleunigungsempfindlichen Auslöseorgans auslenkbaren Stütze auflagert, dadurch gekennzeichnet, daß die Stütze als eine zwischen einem gehäusefesten Federlager (20) und dem Sperrhebel (14) angeordnete und im Auslösefall unter der Wirkung ihrer Massenkräfte einknickende Druckfeder (19) ausgebildet ist.

2. Vorrichtung nach Anspruch 1, dadurch gekennzeichnet, daß die Stütze aus zwei einzelnen Federn (22) mit einer zwischen diesen angeordneten Trägheitsmasse (23) ausgebildet ist.

3. Vorrichtung zur Freigabe eines mechanischen Energiespeichers, insbesondere einer vorgespannten Feder, in einem Auslösefall, wobei zur Sicherung des Energiespeichers (10) in dessen Ruhelage ein Sperrhebel (14) angeordnet ist, der in seiner den Energiespeicher (10) festlegenden Sperrlage unter Vorspannung auf einer im Auslösefall unter der Wirkung eines beschleunigungsempfindlichen Auslöseorgans auslenkbaren Stütze auflagert, dadurch gekennzeichnet, daß die Stütze aus zwei zwischen einem Auflager (26) und dem Sperrhebel (14) eingespannten, aufeinanderstehend angeordneten und im Auslösefall unter der Wirkung ihrer Massenkräfte einknickenden Körpern (24) gebildet ist.

4. Vorrichtung nach Anspruch 3, dadurch gekennzeichnet, daß die die Stütze bildenden Körper (24) eine zylindrische oder rechteckige Form aufweisen.

5. Vorrichtung nach Anspruch 3 oder 4, dadurch gekennzeichnet, daß die Körper (24) durch eine an ihnen angreifende Zugfeder (25) in ihrer Ausgangslage gehalten sind.

6. Vorrichtung zur Freigabe eines mechanischen Energiespeichers, insbesondere einer vorgespannten Feder, in einem Auslösefall, wobei zur Sicherung des Energiespeichers (10) in dessen Ruhelage ein Sperrhebel (14) angeordnet ist, der in seiner den Energiespeicher (10) festlegenden Sperrlage unter Vorspannung auf einer im Auslösefall unter der Wirkung eines beschleunigungsempfindlichen Auslöseorgans auslenkbaren Stütze auflagert, dadurch gekennzeichnet, daß die Stütze aus einer in einer gehäusefesten Kugelpfanne (29) angeordneten, frei rollbaren Kugel (28) besteht.

7. Vorrichtung zur Freigabe eines mechanischen Energiespeichers, insbesondere einer vorgespannten Feder, in einem Auslösefall, wobei zur Sicherung des Energiespeichers (10) in dessen Ruhelage ein Sperrhebel (14) angeordnet ist, der in seiner den Energiespeicher (10) festlegenden Sperrlage unter Vorspannung auf einer im Auslösefall unter der Wirkung eines beschleunigungsempfindlichen Auslöseorgans auslenkbaren Stütze auflagert, dadurch gekennzeichnet, daß die Stütze aus zwei über ein Gelenk (38) miteinander verbundenen Hebeln (37) in Strecklage besteht, welche mittels einer sich jeweils an den Hebeln (37) abstützenden Feder (39) in der gestreckten Lage gehalten sind, und daß die beiden Auflagerungen für die Hebel (37) eine Auslenkung der Hebel erleichternde Wälzflächen (42) aufweisen dergestalt, daß die vom Hebel (41) auf die Stütze (37) ausgeübte Einspannkraft bei Auslenkung der Stütze (37) konstant bleibt (Fig. 8).

8. Vorrichtung nach einem der Ansprüche 1 bis 7, dadurch gekennzeichnet, daß der Sperrhebel (14) als drehbar gelagerter Winkelhebel ausgebildet ist, unter dessen freiem Ende die Stütze (19, 22, 24, 28, 31, 37) angeordnet ist.

9. Vorrichtung nach einem der Ansprüche 1 bis 7, dadurch gekennzeichnet, daß der Sperrhebel (14) gegen einen an seinem anderen Ende fest gelagerten (17) Kniehebel (15) abgestützt ist und daß die Stütze (19, 22, 24, 31, 37) dem Kniehebelgelenk (16) zugeordnet ist und in der nicht ausgelenkten Stellung den Kniehebel (15) in dessen Ausgangslage hält.

10. Vorrichtung nach Anspruch 9, dadurch gekennzeichnet, daß der Kniehebel (15) zwischen dem Sperrhebel (14) und seinem Festlager (17) gegen die Stütze (19, 22, 24, 28, 31, 37) leicht ausgeknickt ist.

11. Vorrichtung nach Anspruch 10, dadurch gekennzeichnet, daß die Vorknickung des Kniehebels (15) unter fünf Grad liegt.

12. Vorrichtung nach einem der Ansprüche 9 bis 11, dadurch gekennzeichnet, daß der Kniehebel (15) in gestreckter Lage angeordnet und eine auf das Kniehebelgelenk (16) in Richtung der Stütze (19, 22, 24, 28, 31, 37) wirkende, sich am Gehäuse (11) abstützende Druckfeder (30) vorgesehen ist.

13. Vorrichtung zur Freigabe eines mechanischen Energiespeichers, insbesondere einer vorgespannten Feder, in einem Auslösefall, wobei zur Sicherung des Energiespeichers (10) in dessen Ruhelage ein Sperrhebel (14) angeordnet ist, der in seiner den Energiespeicher (10) festlegenden Sperrlage unter Vorspannung auf einer im Auslösefall unter der Wirkung eines beschleunigungsempfindlichen Auslöseorgans auslenkbaren Stütze auflagert, dadurch gekennzeichnet, daß die Stütze aus zwei zwischen einem Auflager und dem Sperrhebel (14) eingespannten, übereinander angeordneten Rollenkörpern (31) gebildet ist, zwischen denen ein bewegliches und von einer Sensormasse (33) beaufschlagtes Rollenlager (32) angeordnet ist.

14. Vorrichtung nach Anspruch 13, dadurch gekennzeichnet, daß das plattenförmige Rollenlager (32) mit einer zylindrisch ausgebildeten, in einer Bohrung (34) eines Gehäuses (35) gegen Federwirkung (36) axial beweglichen Sensormasse (33) verbunden ist.

15. Vorrichtung nach Anspruch 14, dadurch gekennzeichnet, daß zwischen Rollenlager (32) und dem Sperrhebel (14) eine Rolle (31) angeordnet ist, wobei das Rollenlager (32) auf dem Gehäuse (35) beweglich ist.

16. Vorrichtung nach Anspruch 14, dadurch gekennzeichnet, daß zwischen dem Sperrhebel (14) und dem Gehäuse (35) eine in einem Rollenkäfig (49) gehaltene Rolle (31) angeordnet ist und ein mit der Sensormasse (33) verbundener Stößel (50) an dem Rollenkäfig (49) angreift.

17. Vorrichtung nach Anspruch 14, dadurch gekennzeichnet, daß eine einzige Rolle (31) zwischen dem Sperrhebel (14) und einem Absatz (51) der beweglichen Sensormasse (33) angeordnet ist.

## Claims

1. A device for releasing a mechanical energy storage means, especially a prestressed spring, in a release situation with a locking lever (14) being arranged for securing the energy storage means (10) in its resting position, said locking lever (14) resting on a supporting means deflectable in said release situation by an acceleration-sensitive release member and being prestressed in its locking position in which the energy storage means (10) is locked characterized in that said supporting means is embodied as a pressure spring (19) arranged between a spring bearing (20) connected to a housing and the locking lever (14) the pressure spring (19) being deflected in said release situation by forces created by its own inertia.

2. A device according to claim 1, characterized in that the spring supporting means is comprised of two individual springs (22) having an inertia member (23) arranged therebetween.

3. A device for releasing a mechanical energy storage means, especially a prestressed spring, in a release situation with a locking lever (14) being arranged for securing the energy storage means (10) in its resting position, said locking lever (14) resting on a supporting means deflectable in said release situation by an acceleration-sensitive release member and being prestressed in its locking position in which the energy storage means (10) is locked, characterized in that the supporting means is comprised of two bodies (24) clamped between a bearing (26) and the locking lever (14), the bodies resting atop one another and being deflected in said release situation by forces created by their own inertia.

4. A device according to claim 3, characterized in that the bodies (24) forming the supporting means have a cylindrical or rectangular shape.

5. A device according to claim 3 or 4, characterized in that the bodies (24) are maintained in their resting position by a tension spring (25) engaging both bodies.

6. A device for releasing a mechanical energy storage means, especially a prestressed spring, in a release situation with a locking lever (14) being arranged for securing the energy storage means (10) in its resting position, said locking lever (14) resting on a supporting means deflectable in said release situation by an acceleration-sensitive release member and being prestressed in its locking position in which the energy storage means (10) is locked, characterized in that the supporting means is comprised of a ball (28) which is freely rollable within a ball socket (29) connected to the housing.

7. A device for releasing a mechanical energy storage means, especially a prestressed spring, in a release situation with a locking lever (14) being arranged for securing the energy storage means (10) in its position, said locking lever (14) resting on a supporting means deflectable in said release situation by an acceleration-sensitive release member and being prestressed in its locking position in which the energy storage means (10) is locked, characterized in that the supporting means is comprised ot two levers (37) connected to one another by a joint (38) and positioned in a stretched position, and being held in this stretched position by a spring (39) resting at the levers (37), and wherein the two supporting surfaces for the levers (37) are provided with rolling faces (42) for facilitating the deflection of the levers such that the clamping force exerted by the lever (41) onto the supporting means (37) remains constant upon deflection of the supporting means (37) (Fig. 8).

8. A device according to one of the claims 1 to 7, characterized in that the locking lever (14) is a pivotable supported angular lever, under a free end of which the supporting means (19, 22, 24, 28, 31, 37, 43) is arranged.

9. A device according to one of the claims 1 to 7, characterized in that the locking lever (14) is resting on an elbow lever (15) which with its other end is fixedly supported (17), and in that the supporting means (19, 22, 24, 31, 37, 43) is coordinated with the elbow joint (16) and, in its undeflected position, maintains the elbow lever (15) in its resting position.

10. A device according to claim 9, characterized in that the elbow lever (15) is slightly bent toward the supporting means (19, 22, 24, 28, 31, 37, 43) between the locking lever (14) and the abutment (17).

11. A device according to claim 10, characterized in that the bending of the elbow lever (15) is below five degrees.

12. A device according to one of the claims 9 to 11, characterized in that the elbow lever (15) is arranged in a stretched position and a pressure spring (30) is provided which acts on the elbow joint (16) in the direction toward the supporting means (19, 22, 24, 28, 31, 37, 43) and is resting at the housing (11).

13. A device for releasing a mechanical energy storage means, especially a prestressed spring, in a release situation with a locking lever (14) being arranged for securing the energy storage means (10) in its resting position, said locking lever (14) resting on a supporting means deflectable in said release situation by an acceleration-sensitive release member and being prestressed in its locking position in which the energy storage means (10) is locked, chararcterized in that the supporting means is comprised of two rollers (31) clamped between a bearing and the locking lever (14) and arranged one atop the other, whereby between them a movable roller bearing (32) which is actuable by a sensor body (33) is arranged.

14. A device according to claim 13, characterized in that the plate-shape roller bearing (32) is connected to a cylindrical sensor body (33) which is axially movable in a bore (34) of a bearing (35) against a spring force (36).

15. A device according to claim 14, characterized in that between the roller bearing (32) and the locking lever (14) one roller (31) is arranged, whereby the roller bearing (32) is movable on the bearing (35).

16. A device according to claim 14, characterized in that a roller (31) arranged in a roller cage (49) is provided between the locking lever (14) and the bearing (35) and a push rod (50) connected to the sensor body (33) acts on the roller cage (49).

17. A device according to claim 14, characterized in that a single roller (31) is arranged between the locking lever (14) and a step (51) of the movable sensor body (33).

## Revendications

1. Dispositif pour libérer un accumulateur d'énergie mécanique, en particulier un ressort précontraint, dans un cas de déclenchement, comportant, pour maintenir l'accumulateur d'énergie (10) en position de repos, un levier de blocage (14) qui, dans sa position de blocage, entraînant le blocage de l'accumulateur d'énergie (10) sous précontrainte, est placé sur un appui escamotable en cas de déclenchement sous l'action d'un organe de déclenchement sensible à l'accélération, caractérisé en ce que l'appui est réalisé sous forme d'un ressort de pression (19), disposé entre un support à ressort (20) fixe par rapport au carter et le levier de blocage (14) et s'affaissant en cas de déclenchement, sous l'action des efforts dus à son inertie.

2. Dispositif selon la revendication 1, caractérisé en ce que l'appui est composé de deux ressorts individuels (22), avec une masse d'inertie (23) disposés entre eux.

3. Dispositif pour libérer un accumulateur d'énergie mécanique, en particulier un ressort précontraint, dans un cas de déclenchement, comportant, pour maintenir l'accumulateur d'énergie (10) en position de repos, un levier de blocage (14) qui, dans sa position de blocage, entraînant le blocage de l'accumulateur d'énergie (10) sous précontrainte, est placé sur un appui escamotable en cas de déclenchement sous l'action d'un organe de déclenchement sensible à l'accélération, caractérisé en ce que l'appui est réalisé sous forme de deux corps (24), enserrés entre un appui (26) et le levier de blocage (14), superposés et s'affaissant en cas de déclenchement, sous l'action des efforts dus à son inertie.

4. Dispositif selon la revendication 3, caractérisé en ce que les corps (24) constituant l'appui présentent une forme cylindrique ou rectangulaire.

5. Dispositif selon la revendication 3 ou 4, caractérisé en ce que les corps (24) sont maintenus en position initiale au moyen d'un ressort de traction (25) agissant sur eux.

6. Dispositif pour libérer un accumulateur d'énergie mécanique, en particulier un ressort précontraint, dans un cas de déclenchement, comportant, pour maintenir l'accumulateur d'énergie (10) en position de repos, un levier de blocage (14) qui, dans sa position de blocage, entraînant le blocage de l'accumulateur d'énergie (10) sous précontrainte, est placé sur un appui escamotable en cas de déclenchement sous l'action d'un organe de déclenchement sensible à l'accélération, caractérisé en ce que l'appui est composé d'un corps sphérique (28) pouvant rouler librement, disposé dans une auge à sphère (29) fixe par rapport au carter.

7. Dispositif pour libérer un accumulateur d'énergie mécanique, en particulier un ressort précontraint, dans un cas de déclenchement, comportant, pour maintenir l'accumulateur d'énergie (10) en position de repos, un levier de blocage (14) qui, dans sa position de blocage, entraînant le blocage de l'accumulateur d'énergie (10) sous précontrainte, est placé sur un appui escamotable en cas de déclenchement sous l'action d'un organe de déclenchement sensible à l'accélération, caractérisé en ce que l'appui est composé de deux leviers (37) alignés, reliés par l'intermédiaire d'une articulation (38) et maintenus dans la position alignée au moyen d'un ressort (39) prenant appui sur chacun des leviers (37), et en ce que les deux supports des leviers (37) présentent des surfaces de roulement (42), facilitant l'affaissement des leviers, de telle sorte que la force de serrage exercée par le levier (41) sur l'appui (37) reste constante en cas d'affaissement de l'appui (37) (figure 8).

8. Dispositif selon l'une des revendications 1 à 7, caractérisé en ce que le levier de blocage (14) est réalisé sous forme d'un levier coudé monté à rotation, sous l'extrémité libre duquel est disposé l'appui (19,22,24,28,31,37).

9. Dispositif selon l'une des revendications 1 à 7, caractérisé en ce que le levier de blocage (14) est en appui contre un levier à genouillère (15) monté fixe (17) à son autre extrémité et en ce que l'appui (19,22,24,31,27) est associé à l'articulation du levier à genouillère (16) et maintient en position initiale le levier (15), dans la position non affaissée.

10. Dispositif selon la revendication 9, caractérisé en ce qu'entre le levier de blocage (14) et son appui fixe (17), le levier à genouillère (15) est légèrement fléchi, en direction de l'appui (19,22,24,28,31,37).

11. Dispositif selon la revendication 10, caractérisé en ce que le préfléchissement du levier à genouillère (15) est inférieur à cinq degrés.

12. Dispositif selon l'une des revendications 9 à 11, caractérisé en ce que le levier à genouillère (14) est disposé en position étendue et qu'un ressort de pression (30) est prévu, prenant appui sur le carter (11), et agissant sur l'articulation de levier à genouillère (16), en direction de l'appui (19,22,24,28,31,37).

13. Dispositif pour libérer un accumulateur d'énergie mécanique, en particulier un ressort précontraint, dans un cas de déclenchement, comportant, pour maintenir l'accumulateur d'énergie (10) en position de repos, un levier de blocage (14) qui, dans sa position de blocage, entraînant le blocage de l'accumulateur d'énergie (10) sous précontrainte, est placé, sur un appui escamotable en cas de déclenchement sous l'action d'un organe de déclenchement sensible à l'accélération, caractérisé en ce que l'appui est formé de deux corps de roulement (31), disposés l'un au-dessus de l'autre et enserrés entre un support et le levier de blocage (14), entre lesquels est disposé un palier à roulement mobile et sollicité par une masse servant de capteur (33).

14. Dispositif selon la revendication 13,caractérisé en ce que le palier à roulement (32) en forme de plaque est relié à une masse servant de capteur (33), de forme cylindrique, mobile axialement contre l'effet d'un ressort (36), dans un perçage (34) d'un carter (35).

15. Dispositif selon la revendication 14, caractérisé en ce qu'un rouleau (31) est disposé entre le palier à roulement (32) et le levier de blocage (14), le palier à roulement (32) étant mobile sur le carter (35).

16. Dispositif selon la revendication 14, caractérisé en ce qu'entre le levier de blocage (14) et le carter (35) est disposé un rouleau (31), maintenu dans une cage à rouleaux (49) et un poussoir (50) relié à la masse servant de capteur (33) agissant sur la cage à rouleau (49).

17. Dispositif selon la revendication 14, caractérisé en ce qu'un seul rouleau (31) est disposé entre le levier de blocage (14) et un décrochement (51) de la masse servant de capteur (33) mobile.
